# EUROPÄISCHE PATENTSCHRIFT

(11) **EP 2 436 945 B1**
(45) Veröffentlichungstag und Bekanntmachung des Hinweises auf die Patenterteilung: **16.07.2014**
(21) Anmeldenummer: 11007702.1
(22) Anmeldetag: 22.09.2011
(51) Int. Cl.: F16D 41/26

(54) **Rückwärtsschieben ohne Pedalbewegung**
Pushing backwards without pedal movement
Glissement en arrière sans mouvement de pédale

(30) Priorität: 30.09.2010 DE 102010047165
(43) Veröffentlichungstag der Anmeldung: 04.04.2012
(73) Patentinhaber: SRAM Deutschland GmbH, 97424 Schweinfurt (DE)
(72) Erfinder: Steuer, Werner, 97424 Schweinfurt (DE); Pehse, Gunter, Dipl.-Ing., 97464 Niederwerrn (DE); Kühne, Karl-Joachim, Dipl.-Ing., 97464 Oberwerrn (DE)

(56) Entgegenhaltungen:
- DE-A1-102009 013 577
- DE-C1- 10 002 334
- JP-A- 2009 186 001

## Beschreibung

In Antriebsnaben von muskelgetriebenen Fahrzeugen mit zwei Rädern mit Tretkurbelantrieb und Rollenkettengetriebe, wie zum Beispiel konventionellen Fahrrädern, wird die Zugkraft im Zugtrum der Antriebskette auf ein kleines Kettenrad am Antreiber der Hinterradnabe übertragen. Dort entsteht ein Drehmoment, das über mindestens einen Drehmomentenpfad bis auf die Hülse der Hinterradnabe übertragen wird. Die Naben können über ein im Inneren der Nabe vorhandenes Getriebe verfügen, das von außen ausgelöst von einer Schaltbetätigung an einem Schalter auf mechanischem Weg, oder unter Zuhilfenahme von elektrischen Komponenten, oder automatisch in Abhängigkeit von der Nabendrehzahl beziehungsweise vom Drehmoment im Drehmomentenpfad durch die Nabe geschaltet wird.

Meist weisen die Antriebsnaben einen Freilauf auf, der den Drehmomentenpfad durch die Nabe bis hin zur Nabenhülse unterbricht, wenn die Nabenhülse weiter gedreht wird, aber antriebsseitig keine Drehbewegung stattfindet.

Die Verhältnisse im Drehmomentenpfad durch die Nabe ändern sich, wenn eine Drehbewegung nicht am Antreiber, sondern an der Nabenhülse eingeleitet wird. Die Rückwärts-Drehrichtung bei einer entgegengesetzten Drehung an der Nabenhülse entspricht dann der Sperr-Richtung des Freilaufs im Drehmomentenpfad. Der Drehmomentenpfad wird in diesem Fall nicht unterbrochen. Der Richtungssinn der Drehung ist gegenüber dem Richtungssinn bei einer Vorwärtsdrehung zwar entgegengesetzt, aber die im Drehmomentenpfad vorhandenen Drehmomente entsprechen denen bei einer Vorwärtsdrehung. Die Drehbewegung wird bis zum Antreiber und von dort über die Antriebskette bis hin zum Tretkurbelantrieb übertragen. Diese Bewegung kann störend in Erscheinung treten.

In der DE 100 03 334 C1 ist eine Antriebsnabe für ein Tretfahrzeug für Kinder, zum Beispiel ein Dreirad, gezeigt, die ein wesentlicher Bestandteil im Antriebstrang zwischen Tretantrieb und Fahrzeug-Rad ist. Bei diesen Tretfahrzeugen ist vorteilhaft, wenn in beiden Drehrichtungen ein Antrieb erfolgen kann und trotzdem eine Entkopplung zwischen dem Tretantrieb und dem Fahrzeug-Rad dann erfolgt, wenn vom Nutzer des Tretfahrzeuges kein Drehmoment am Tretantrieb aufgebracht wird. Das ist immer dann der Fall, wenn die mit dem Tretantrieb erzeugte Drehbewegung in Vorwärts- oder in Rückwärtsdrehrichtung hinter der Drehbewegung der am Erdboden abrollenden Fahrzeug-Räder zurückbleibt, oder bei still stehendem Tretantrieb. Damit wird vermieden, dass bei rollendem Fahrzeug eine Drehbewegung auf den Tretantrieb übertragen wird, und es werden Verletzungen an Beinen und Füßen des Fahrzeugnutzers vermieden.

Zu diesem Zweck wird ein in beiden Drehrichtungen wirkender Freilauf vorgesehen.

Beim erfindungsgemäßen Gegenstand ist eine auf die Fahrzeugräder übertragbare Antriebsbewegung lediglich für eine Vorwärtsbewegung des Fahrzeuges vorgesehen.

DE 10 2009 013 577 A1 offenbart eine Antriebsnabe nach dem Oberbegriff des Anspruchs 1.

Störend ist eine rückwärts gerichtete Bewegung der Tretkurbeln mit den Pedalen zum Beispiel dann, wenn ein Fahrrad in eine Einrichtung zum Abstellen des Fahrrades rangiert wird. Die Tretkurbel befindet sich dann nach dem Rangieren unter Umständen in der falschen Position, wenn das Fahrrad platzsparend in unmittelbarer Nähe zu einem benachbarten Rad in der Abstelleinrichtung eingeordnet werden soll. Ist ein Fahrrad mit einem Parkständer in der Nähe des Tretlagergehäuses ausgestattet, kann beim Rangieren mit dem abgeklappten Parkständer die Tretkurbel gegen den Parkständer anstoßen und Probleme verursachen.

Auch können die sich bewegenden Pedale störend gegen das Bein des Fahrradfahrers stoßen, wenn er sein Fahrrad vor sich her schiebt.

Ganz besonders störend treten die sich bewegenden Pedale aber dann in Erscheinung, wenn ein zusammengeklapptes Klappfahrrad rückwärts geschoben wird, die Pedale dann zwar zunächst in Freiräumen zwischen Bestandteilen des Fahrradrahmens positioniert sind, mit fortschreitender Bewegung aber an diesen Bestandteilen des Fahrradrahmens anschlagen und eine weitere Bewegung verhindert wird. Außerdem besteht dabei die Gefahr von Beschädigungen am Fahrradrahmen.

Die vorliegende Erfindung macht es sich deshalb zur Aufgabe, die Rückwärtsdrehbewegung einer Nabenhülse einer Fahrradnabe zu ermöglichen, ohne dass sich die Tretkurbel rückwärts mitdreht. Diese Aufgabe wird durch eine Einrichtung zum Ausschalten des Freilaufes ermöglicht, die bei einer Rückwärts-Drehbewegung der Nabenhülse aktiviert wird. Zu diesem Zweck wird eine Reibeinrichtung vorgesehen, die mit Steuermitteln zum Ausschalten von Klinken des Freilaufs zusammenwirkt.

Eine bevorzugte Ausführungsform der erfindungsgemäßen Antriebsnabe wird im Folgenden beschrieben:
- Fig. 1: zeigt eine erfindungsgemäße Zweigang-Getriebenabe, die in Abhängigkeit von der Geschwindigkeit automatisch geschaltet wird, in Schnittdarstellung entlang der Mittellängsachse.
- Fig. 2: zeigt die erfindungsgemäße Nabe nach Fig. 1 geschnitten durch den Antreiber an der Position A-A, wo sich weiterhin ein Kugellager befindet.
- Fig. 3: zeigt einen Schnitt der Nabe nach Fig. 1 an der Position B-B, zwischen dem Antreiber und einer Zahnhülse.
- Fig. 4: zeigt einen Schnitt durch die Getriebenabe nach Fig. 1 an der Position C-C von Fliehgewichten eines Umschaltmechanismus.
- Fig. 5: zeigt einen Schnitt durch die Nabe nach Fig. 1 an der Position D-D, wo sich die Klinken eines Direktgang-Klinkenfreilaufes befinden.
- Fig. 6: zeigt die Reibeinrichtung zum Steuern des Direktgang-Klinkenfreilaufes aus Fig. 5 in perspektivischer Darstellung schräg von der Seite des Planetengetriebes.
- Fig. 7: zeigt die Reibeinrichtung zum Steuern des Direktgang-Klinkenfreilaufes aus Fig. 5 in perspektivischer Darstellung schräg von der Seite, die dem Planetengetriebe abgewandt ist.

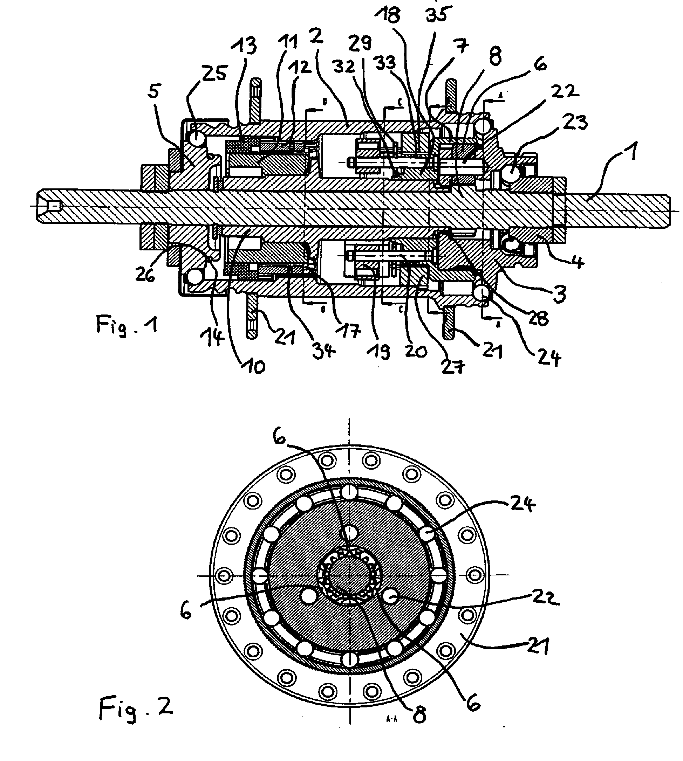

Die Fahrradnabe mit dem erfindungsgemäßen Klinkenfreilauf nach Fig. 1 verfügt über eine Nabenachse 1, die mit dem nicht dargestellten Fahrradrahmen fest verbunden wird. Gegenüber der Nabenachse 1 drehbar gelagert sind ein Antreiber 3 sowie die Nabenhülse 2 mittels der Kugellager I bis III. Die Nabenhülse 2 trägt zwei Speichenflansche 21 zur Aufnahme der Enden von nicht dargestellten Speichen.

Die Planetengetriebemechanik mit dem in Fig. 2 sichtbaren Sonnenrad 8, mit diesem Sonnenrad 8 in Eingriff befindlichen Planetenrädern 6 sowie einem Hohlrad 7, stellt zwei Gangstufen zur Verfügung. Das Sonnenrad 8 ist integral und somit drehfest mit der Nabenachse 1 verbunden. Die Planetenräder 6 sind mit einem Hohlrad 7 und dem Sonnenrad 8 in Eingriff. Der Antreiber 3 ist einstückig verbunden mit dem Planetenradträger des Planetengetriebes, in dem die Planetenräder 6 drehbar um die jeweiligen Planetenradachsen 22 gelagert sind.

Das Planetengetriebe in Verbindung mit einem Umschaltmechanismus ermöglicht, in Abhängigkeit von der Drehgeschwindigkeit des Hohlrades 7, zwischen 2 Gangstufen automatisch umzuschalten.

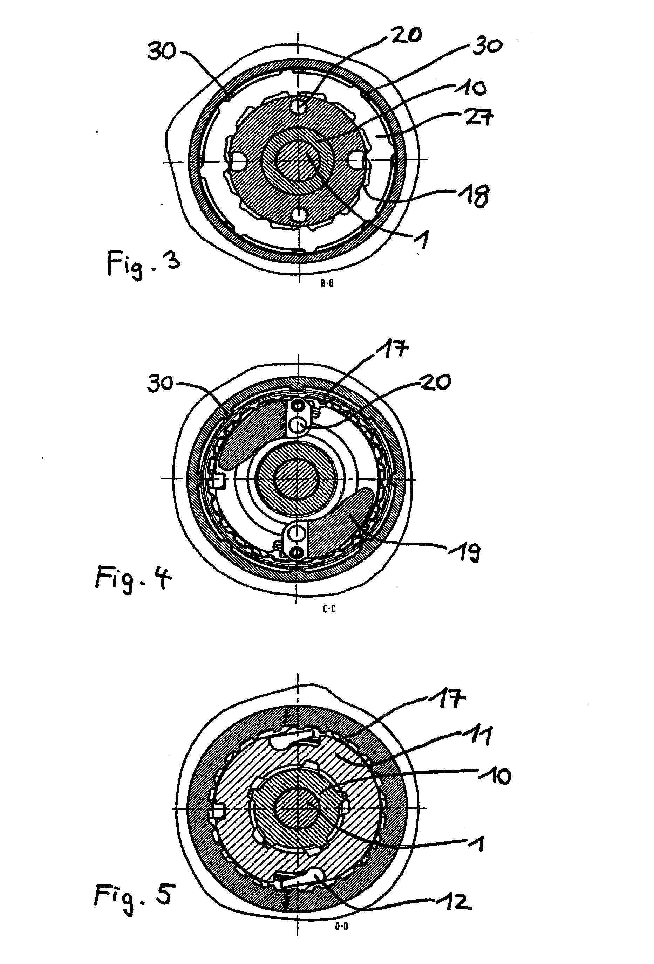

In Fig. 3 ist eine Zahnhülse 27 gezeigt, die nach radial innen eine Schnellgang-Rastverzahnung 18 sowie nach radial außen ein Mitnahmeprofil zur Drehkopplung mit der Nabenhülsenverzahnung 30 an der Nabenhülse 2 aufweist. An einer axialen Verlängerung 35 des Hohlrades 7 sind die nicht dargestellten Schnellgang-Klinken 9 auf dem radialen Niveau der in Fig. 1 erkennbaren Feder 33 für die Schnellgang-Klinke 9 gelagert, die in die Schnellgang-Rastverzahnung 18 an der Zahnhülse 27 eingreifen können. Ihr Eingriff kann durch eine Klinkensteuerscheibe 29 verhindert werden, die an einem Fortsatz 32 des Hohlrades zentriert und gelagert wird. Dabei wird die Klinkensteuerscheibe 29 durch das Wirken von Fliehgewichten 19, die in Fig. 4 gezeigt sind, gegenüber den Schnellgang-Klinken 9 verdreht, wobei Steuerkonturen an der Klinkensteuerscheibe 29 mit den Schnellgangklinken 9 zusammen wirken. Jeweils ein Fliehgewicht 19 ist drehbar an einem Fliehgewicht-Bolzen 20 gelagert, der sich in Richtung parallel zur Nabenachse 1 erstreckt und fest mit der axialen Verlängerung 35 des Hohlrades 7 verbunden ist. Bei entsprechend großer Drehgeschwindigkeit des Hohlrades schwenken die Fliehgewichte nach radial außen und geben die Schnellgang-Klinken 9 frei für einen Eingriff mit der Schnellgang-Rastverzahnung 18 innen an der Zahnhülse 27, wobei nach Überwindung eines Drehspiels der Zahnhülse 27 gegenüber der Nabenhülse 2 die Zahnhülse 27 die Nabenhülse 2 mit dreht. Die freigegebenen Schnellgang-Klinken 9 werden, wie üblich, durch eine Feder in Richtung der Schnellgang-Rastverzahnung 18 geschwenkt. Eine Verschwenkung der Fliehgewichte 19 in der Gegenrichtung nach radial innen erfolgt durch eine nicht dargestellte Rückholfeder. In radialer Richtung zwischen der Planetengetriebemechanik und der Nabenhülse 2 ist eine Hülse 10 angeordnet, die mittels einer Mitnahmeverzahnung 28 drehfest mit dem Antreiber 3 verbunden ist. Diese Hülse 10 erstreckt sich in axialer Richtung bis zu einem großen Nabenkonus 5. Dieser Nabenkonus 5 ist zwischen der Nabenachse 1 und der Nabenhülse 2 angeordnet und ist drehfest gegenüber der Nabenachse 1.

Sind die Schnellgangklinken 9 nicht im Eingriff, ist in der Antriebsnabe der Direktgang eingeschaltet. Gemeinsam mit dem Antreiber 3 drehen sich dann in Vorwärts-Drehrichtung die Planetenräder 6, das Hohlrad 7, die Fliehgewichte 19, die Hülse 10, die Direktgang-Klinken 12 sowie die Nabenhülse 2. Vom Schaltzustand der Fliehgewichte 19 und dementsprechend der Position der Klinkensteuerscheibe 29 hängt ab, ob der Antrieb der Nabenhülse 2 von den Direktgang-Klinken 12 oder von den Schnellgang-Klinken 9 erfolgt.

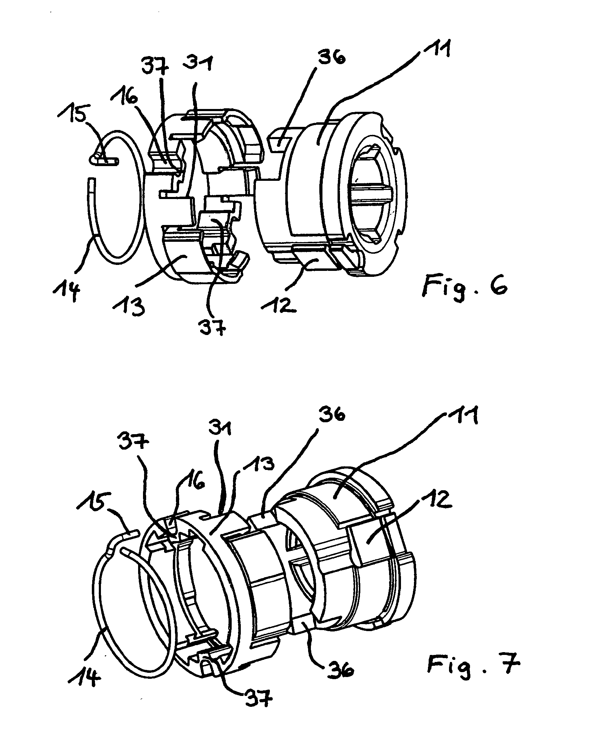

Im Raum radial zwischen der Hülse 10 und der Nabenhülse 2, sowie axial zwischen großem Nabenkonus 5 und Fliehgewichten 19 ist der Steuermechanismus angeordnet, der das Rückwärtsdrehen der Nabenhülse 2 gegenüber der Nabenachse ermöglicht, ohne dass sich der Antreiber 3 mitdrehen muss. Dieser Steuermechanismus ist als Explosivdarstellung in den Figuren 6 und 7 dargestellt, wobei in Fig. 6 die Blickrichtung von der Antreiber-Seite und in Fig. 7 von der Seite des großen Nabenkonus 5 ist. Die Bestandteile des Steuermechanismus sind eine Friktionsfeder 14, ein Klinkenträger 11 sowie eine mit einem Klinkenträger 11 verbundene Steuerhülse 13.

Der Klinkenträger 11 trägt die Direktgang-Klinken 12, die mittels der Feder 34 für einen Eingriff in die Direktgang-Rastverzahnung 17 vorgespannt sind. Die Direktgang-Klinken 12 können bei einer relativen Vorwärtsdrehung gegenüber der Nabenhülse 2 in die Direktgang-Rastverzahnung 17 an der inneren Peripherie der Nabenhülse 2 eingreifen. Wird die Nabenhülse 2 gegenüber den Direktgang-Klinken 12 rückwärts gedreht, kommen die Direktgang-Klinken 12 zunächst in Eingriff mit der Direktgang-Verzahnung 17 an der Nabenhülse 2, und die Direktgang-Klinken 12 und mit ihnen der Klinkenträger 11 werden drehend mitgenommen. Bei der Rückwärtsdrehung des Klinkenträgers kommt es zu einer Relativdrehung des Klinkenträgers 11 gegenüber der Steuerhülse 13, weil diese durch die Friktionsfeder 14 an einer Rückwärtsdrehung gehindert wird. Dazu ist der Federansatz 15 an einem Ende der Friktionsfeder 14 in einer Federmitnahmenut 16 in der Steuerhülse 13 eingehängt, während die übrige Friktionsfeder als Ring ausgebildet ist, der in einer Friktionsfedernut 26 am großen Nabenkonus 5 eingreift und eine Friktionskraft erzeugt. Die Friktionsfeder 14 ist so ausgebildet, dass bei der Rückwärtsdrehung des Federansatzes 15 gegenüber der Friktionsfedernut 26 der Ring tendenziell zusammengezogen wird und sich die Friktionskraft erhöht gegenüber der Reibungskraft, die schon infolge einer Vorspannung zwischen Friktionsfeder 14 und Friktionsfedernut 26 entsteht.

Der Klinkenträger 11 kann sich relativ gegenüber der Steuerhülse 13 drehen, bis eine nach radial innen an der Steuerhülse 13 vorstehende Anschlagnase 37 am Drehanschlag 36 am axialen Ende des Klinkenträgers 11 anschlägt. Bei dieser Relativdrehung des Klinkenträgers 11 gegenüber der Steuerhülse 13 werden die Direktgang-Klinken 12 gegen eine Steuerkante 31 an der Steuerhülse geschoben und dabei nach radial innen gedrückt und somit ausgesteuert. Dabei kommen sie außer Eingriff mit der Direktgang-Rastverzahnung 17 an der Nabenhülse 2, und die Nabenhülse kann sich ungehindert rückwärts drehen. Die Elemente im Drehmomentenpfad im Innern der Nabe bleiben stehen, und mit ihnen auch die Tretkurbel des Kettenantriebes. Damit wird das erfindungsgemäße Ziel erreicht, beim Rückwärtsdrehen der Nabenhülse die Rückwärtsdrehung der Tretkurbel zu unterdrücken. Das beschriebene Aussteuern der Direktgang-Klinken 12 erfolgt in einem Zustand, in dem keine Kräfte zwischen Direktgang-Klinke 12 und Direktgang-Rastverzahnung 17 wirken, abgesehen von Reibungskräften im Drehmomentenpfad. Damit setzt die Direktgang-Klinke 12 dem Aussteuern auch keine Widerstände entgegen, und die Friktionskraft der Friktionsfeder 14 ist ausreichend für den Umsteuerprozess.

Es ist nicht notwendig, beim Rückwärtsdrehen der Nabenhülse 2 auch noch die Schnellgangklinken 9 auszuschalten. In den Betriebszuständen, in denen das erfindungsgemäße Prinzip angewendet werden soll, liegt eine so kleine Drehgeschwindigkeit vor, bei der die Fliehgewichte die Schnellgang-Klinken 9 ohnehin noch nicht freigegeben haben für einen Eingriff an der Schnellgang-Rastverzahnung 18.

Die erfindungsgemäße Idee besteht darin, die Rückwärtsdrehung der Tretkurbel beim Rückwärtsdrehen der Nabenhülse zu verhindern, wie sie andernfalls zum Beispiel beim Rückwärtsschieben eines zusammengeklappten Klappfahrrades auf dem Hinterrad störend in Erscheinung tritt. Diese Idee ist nicht an die beschriebene Ausführungsform, und auch nicht an eine Fahrradnabe mit einem Getriebe gebunden. Das Grundprinzip ist ebenso bei einer Nabe ohne Getriebe anwendbar.

Die Friktionseinrichtung könnte in der Art einer Lamellenkupplung ausgebildet werden, und sie könnte auch mit einer anderen, relativ zum Freilauf drehenden Komponente in irgendeinem Drehmomentenpfad eine funktionelle Kopplung herstellen. Es ist nur entscheidend, dass diese Bewegungsverhältnisse in allen einschaltbaren Gangstufen bestehen.

Statt eines Freilaufes mit Klinken und Rastverzahnung könnte auch ein Freilauf mit Klemmrollen angewendet werden, und der erfindungsgemäße Freilauf muss nicht im Direktgang-Drehmomentenpfad angeordnet sein.

Das gezeigte Ausführungsbeispiel einer erfindungsgemäßen Antriebsnabe verfügt nicht über eine Nabenbremse. Andere Ausführungsbeispiele könnten ebenso mit einer Nabenbremse ausgestattet sein.

Auch ist das Prinzip nicht auf die Nutzung in einem konventionellen Fahrrad beschränkt. Es ist auch anwendbar an einem Fahrrad mit Tretkurbelantrieb direkt an der Antriebsnabe.

### Bezugszeichenliste

- 1: Nabenachse
- 2: Nabenhülse
- 3: Antreiber
- 4: antreiberseitiger Nabenkonus
- 5: großer Nabenkonus
- 6: Planetenrad
- 7: Hohlrad
- 8: Sonnenrad
- 9: Schnellgang-Klinke
- 10: Hülse
- 11: Klinkenträger
- 12: Direktgang-Klinke
- 13: Steuerhülse
- 14: Friktionsfeder
- 15: Federansatz
- 16: Federmitnahmenut
- 17: Direktgang-Rastverzahnung
- 18: Schnellgang-Rastverzahnung
- 19: Fliehgewicht
- 20: Fliehgewicht-Bolzen
- 21: Speichenflansch
- 22: Planetenradachse
- 23: Kugellager I
- 24: Kugellager II
- 25: Kugellager III
- 26: Friktionsfedernut
- 27: Zahnhülse
- 28: Mitnahmeverzahnung
- 29: Klinkensteuerscheibe
- 30: Nabenhülsenverzahnung
- 31: Steuerkante
- 32: Fortsatz am Hohlrad
- 33: Feder der Schnellgang-Klinke
- 34: Feder der Direktgang-Klinke
- 35: axiale Verlängerung des Hohlrads
- 36: Drehanschlag
- 37: Anschlagnase

## Patentansprüche

1. Antriebsnabe für kurbelgetriebene Fahrzeuge mit zwei Rädern;
wobei die Antriebsnabe eine feststehende Nabenachse (1) und eine gegenüber der Nabenachse (1) drehbar gelagerte Nabenhülse (2) aufweist;
mit einem Freilauf (12, 17) in einem Drehmomentenpfad in der Antriebsnabe zwischen einem Antreiber (3) und der Nabenhülse (2);
mit einer Steuereinrichtung zum Ausschalten des Freilaufs (12, 17);
**dadurch gekennzeichnet,**
**dass** der Freilauf (12,17) bei einer Rückwärts-Drehbewegung an der Nabenhülse (2) automatisch ausgeschaltet wird, so dass im Drehmomentenpfad mit dem Freilauf (12, 17) kein Drehmoment übertragen werden kann.

2. Antriebsnabe nach Anspruch 1
**dadurch gekennzeichnet,**
**dass** die Steuereinrichtung ein Steuerteil (13) aufweist, das mittels einer Friktionseinrichtung (14) mit einer Komponente der Antriebsnabe funktionell verbunden ist, wobei in allen Betriebszuständen der Antriebsnabe mit einer Vorwärtsdrehung des Antreibers (3) eine Differenz zwischen der Drehgeschwindigkeit der Komponente der Antriebsnabe und der Drehgeschwindigkeit der Nabenhülse (2) besteht, wobei das Steuerteil (13) den Freilauf (12, 17) schaltet.

3. Antriebsnabe nach Anspruch 2
**dadurch gekennzeichnet,**
**dass** die Friktionseinrichtung (14) funktionell zwischen dem Steuerteil (13) und einem großen Nabenkonus (5) angeordnet ist, der drehfest gegenüber der Nabenachse (1) angeordnet ist.

4. Antriebsnabe nach Anspruch 2 oder 3
**dadurch gekennzeichnet,**
**dass** der Freilauf eine gegen die Rückstellkraft einer Feder radial nach innen oder nach radial außen verschwenkbare Klinke (12) enthält, die in eine korrespondierende Rastverzahnung (17) eingreift.

5. Antriebsnabe nach Anspruch 4
**dadurch gekennzeichnet,**
**dass** das Steuerteil (13) die Klinke (12) des Freilaufs daran hindert, bei Rückwärtsdrehung der Nabenhülse (2) in die Rastverzahnung (17) einzugreifen.

6. Antriebsnabe nach Anspruch 4 oder 5
**dadurch gekennzeichnet,**
**dass** das Steuerteil (13) gegenüber dem Klinkenträger (11) ein Verdrehspiel aufweist, bei dessen Überwindung die Klinke (12) außer Eingriff mit der Rastverzahnung (17) gebracht wird.

7. Antriebsnabe nach Anspruch 2 oder 3
**dadurch gekennzeichnet,**
**dass** die Friktionseinrichtung von einer Friktionsfeder (14) mit einem ringförmig gebogenen Abschnitt und einem seitlich abgebogenen Abschnitt, einem Federansatz (15) gebildet wird,
wobei der Federansatz (15) in eine Federmitnahmenut (16) am Steuerteil (13) eingreift, um gemeinsam mit dem Steuerteil (13) zu drehen;
wobei weiterhin der ringförmig gebogene Abschnitt in eine Friktionsfedernut (26) an einem unverdrehbar gegenüber der Nabenachse (1) angeordneten großen Nabenkonus (5) eingreift, um mit dem großen Nabenkonus (5) in reibschlüssiger Verbindung zu stehen.

8. Antriebsnabe nach Anspruch 2 oder 3
**dadurch gekennzeichnet,**
**dass** der Freilauf ein Klemmrollenfreilauf ist.

9. Antriebsnabe nach einem der Ansprüche 1 bis 6
**dadurch gekennzeichnet,**
**dass** die Antriebsnabe eine Getriebenabe mit einer Getriebemechanik mit zwei Drehmomentenpfaden mit unterschiedlichen Übersetzungsverhältnissen ist, wobei automatisch in Abhängigkeit von der Drehgeschwindigkeit des Antreibers (3) zwischen einem Drehmomentenpfad mit einem Direktgang sowie einem Drehmomentenpfad mit einem Schnellgang umgeschaltet wird.

10. Antriebsnabe nach Anspruch 9
**dadurch gekennzeichnet,**
**dass** der Antreiber (3) und der Planetenradträger ein Teil bilden.

11. Antriebsnabe nach Anspruch 9
**dadurch gekennzeichnet,**
**dass** das Hohlrad (7) eine axiale Verlängerung (35), und dass die axiale Verlängerung (35) einen axialen Fortsatz (32) aufweist, an dem eine Steuerscheibe für das automatische Umschalten einer Schnellgang-Klinke (9) gelagert ist.

12. Antriebsnabe nach Anspruch 9
**dadurch gekennzeichnet,**
**dass** der Freilauf (12, 17) die Direktgang-Klinke (12) enthält, die im Drehmomentenpfad mit dem Direktgang zwischen Getriebemechanik und Nabenhülse (2) angeordnet ist.

## Claims

1. Drive hub for crank-driven vehicles with two wheels, the drive hub having a fixed hub axle (1) and a hub sleeve (2) mounted rotatably with respect to the hub axle (1);
with a freewheel (12, 17) in a torque path in the drive hub between a driver (3) and the hub sleeve (2);
with a control device for cutting out the freewheel (12, 17);
**characterized**
**in that** the freewheel (12, 17) is cut out automatically in the event of a backwards rotational movement at the hub sleeve (2), so that torque cannot be transferred by means of the freewheel (12, 17) in the torque path.

2. Drive hub according to Claim 1,
**characterized**
**in that** the control device has a control part (13) which is functionally connected to a component of the drive hub by means of a friction device (14), there being a difference between the rotational speed of the component of the drive hub and the rotational speed of the hub sleeve (2) in all the operating states of the drive hub having forward rotation of the driver (3), the control part (13) switching the freewheel (12, 17).

3. Drive hub according to Claim 2,
**characterized**
**in that** the friction device (14) is arranged functionally between the control part (13) and a large hub cone (5) which is arranged fixedly in terms of rotation with respect to the hub axle (1).

4. Drive hub according to Claim 2 or 3,
**characterized**
**in that** the freewheel contains a pawl (12) which is pivotable radially inwards or radially outwards counter to the return force of a spring and which engages into a matching latch-toothing (17).

5. Drive hub according to Claim 4,
**characterized**
**in that** the control part (13) prevents the pawl (12) of the freewheel from engaging into the latch-toothing (17) in the event of backwards rotation of the hub sleeve (2).

6. Drive hub according to Claim 4 or 5,
**characterized**
**in that** the control part (13) has with respect to the pawl carrier (11) a rotary play, upon the overcoming of which the pawl (12) is brought out of engagement with the latch-toothing (17).

7. Drive hub according to Claim 2 or 3,
**characterized**
**in that** the friction device is formed by a friction spring (14) with an annularly bent portion and with a laterally bent-away portion, and a spring extension (15), the spring extension (15) engaging into a spring take-up groove (16) on the control part (13) in order to rotate jointly with the control part (13); and, furthermore, the annularly bent portion engaging into a friction-spring groove (26) on a large hub cone (5) arranged non-rotatably with respect to the hub axle (1), in order to be connected frictionally to the large hub cone (5).

8. Drive hub according to Claim 2 or 3,
**characterized**
**in that** the freewheel is a clamping-roller freewheel.

9. Drive hub according to one of Claims 1 to 6,
**characterized**
**in that** the drive hub is a gear hub with a gear mechanism having two torque paths with different step-up ratios, a changeover between a torque path with direct drive and a torque path with overdrive taking place automatically as a function of the rotational speed of the driver (3).

10. Drive hub according to Claim 9,
**characterized**
**in that** the driver (3) and the planet-wheel carrier form one part.

11. Drive hub according to Claim 9,
**characterized**
**in that** the ring wheel (7) has an axial prolongation (35), and in that the axial prolongation (35) has an axial extension (32) on which a control disc for the automatic changeover of an overdrive pawl (9) is mounted.

12. Drive hub according to Claim 9,
**characterized**
**in that** the freewheel (12, 17) contains the direct-drive pawl (12) which is arranged in the torque path with direct drive between the gear mechanism and hub sleeve (2).

## Revendications

1. Moyeu d'entraînement pour des véhicules deux roues entraînés par vilebrequin, le moyeu d'entraînement présentant un axe de moyeu fixe (1) et un manchon de moyeu (2) monté à rotation par rapport à l'axe de moyeu (1) ;
comprenant une roue libre (12, 17) dans un chemin de couple dans le moyeu d'entraînement entre un dispositif d'entraînement (3) et le manchon de moyeu (2) ;
comprenant un dispositif de commande pour le désengagement de la roue libre (12, 17) ; **caractérisé en ce que**
la roue libre (12, 17) est désengagée automatiquement lors d'un mouvement de rotation vers l'arrière au niveau du manchon de moyeu (2), de sorte qu'aucun couple ne puisse être transmis avec la roue libre (12, 17) dans le chemin de couple.

2. Moyeu d'entraînement selon la revendication 1,
**caractérisé en ce que**
le dispositif de commande présente une partie de commande (13) qui est en liaison fonctionnelle au moyen d'un dispositif de friction (14) avec un composant du moyeu d'entraînement, une différence entre la vitesse de rotation du composant du moyeu d'entraînement et la vitesse de rotation du manchon de moyeu (2) existant dans tous les états de fonctionnement du moyeu d'entraînement avec une rotation vers l'avant du dispositif d'entraînement (3), la partie de commande (13) commutant la roue libre (12, 17).

3. Moyeu d'entraînement selon la revendication 2,
**caractérisé en ce que**
le dispositif de friction (14) est disposé fonctionnellement entre la partie de commande (13) et un gros cône de moyeu (5), qui est disposé de manière solidaire en rotation par rapport à l'axe de moyeu (1).

4. Moyeu d'entraînement selon la revendication 2 ou 3,
**caractérisé en ce que**
la roue libre contient un cliquet (12) pouvant pivoter radialement vers l'intérieur ou vers l'extérieur à l'encontre de la force de rappel d'un ressort, lequel cliquet s'engage dans une denture d'encliquetage (17) correspondante.

5. Moyeu d'entraînement selon la revendication 4,
**caractérisé en ce que**
la partie de commande (13) empêche le cliquet (12) de la roue libre de s'engager dans la denture d'encliquetage (17) lors de la rotation vers l'arrière du manchon de moyeu (2).

6. Moyeu d'entraînement selon la revendication 4 ou 5,
**caractérisé en ce que**
la partie de commande (13) présente un jeu de rotation par rapport au support de cliquet (11), le cliquet (12) étant amené hors d'engagement avec la denture d'encliquetage (17) lorsque le jeu de rotation est surmonté.

7. Moyeu d'entraînement selon la revendication 2 ou 3,
**caractérisé en ce que**
le dispositif de friction est formé par un ressort de friction (14) ayant une portion cintrée sous forme annulaire et une portion cintrée latéralement, un bout de ressort (15),
le bout de ressort (15) s'engageant dans une rainure d'entraînement de ressort (16) sur la partie de commande (13) afin de tourner conjointement avec la partie de commande (13) ;
la portion cintrée sous forme annulaire s'engageant en outre dans une rainure de ressort de friction (26) sur un gros cône de moyeu (5) disposé de manière non rotative par rapport à l'axe de moyeu (1), afin d'être en liaison par engagement par friction avec le gros cône de moyeu (5).

8. Moyeu d'entraînement selon la revendication 2 ou 3,
**caractérisé en ce que**
la roue libre est une roue libre à rouleaux de serrage.

9. Moyeu d'entraînement selon l'une quelconque des revendications 1 à 6,
**caractérisé en ce que**
le moyeu d'entraînement est un moyeu de transmission avec un mécanisme de transmission ayant deux chemins de couple avec des rapports de démultiplication différents, une commutation se produisant automatiquement en fonction de la vitesse de rotation du dispositif d'entraînement (3) entre un chemin de couple à prise directe et un chemin de couple à rapport surmultiplié.

10. Moyeu d'entraînement selon la revendication 9,
**caractérisé en ce que**
le dispositif d'entraînement (3) et le porte-satellites forment une pièce unitaire.

11. Moyeu d'entraînement selon la revendication 9,
**caractérisé en ce que**
la couronne (7) présente un prolongement axial (35), et **en ce que** le prolongement axial (35) présente une saillie axiale (32) sur laquelle est monté un disque de commande pour la commutation automatique d'un cliquet à rapport surmultiplié (9) .

12. Moyeu d'entraînement selon la revendication 9,
**caractérisé en ce que**
la roue libre (12, 17) contient le cliquet de prise directe (12) qui est disposé dans le chemin de couple à prise directe entre le mécanisme de transmission et le manchon de moyeu (2).
